(19) Europäisches Patentamt
European Patent Office
Office européen des brevets

(11) **EP 2 069 818 B1**

(12) **FASCICULE DE BREVET EUROPEEN**

(45) Date de publication et mention
de la délivrance du brevet:
**09.12.2009 Bulletin 2009/50**

(51) Int Cl.:
***G01S 5/14*** (2006.01)

(21) Numéro de dépôt: **07820543.2**

(22) Date de dépôt: **25.09.2007**

(86) Numéro de dépôt international:
**PCT/EP2007/060139**

(87) Numéro de publication internationale:
**WO 2008/040658 (10.04.2008 Gazette 2008/15)**

(54) **PROCEDE ET DISPOSITIF DE SURVEILLANCE DE L'INTEGRITE DES INFORMATIONS DELIVREES PAR UN SYSTEME HYBRIDE INS/GNSS**

VERFAHREN UND EINRICHTUNG ZUM ÜBERWACHEN DER INTEGRITÄT VON DURCH EIN HYBRID-INS/GNSS-SYSTEM BEREITGESTELLTEN INFORMATIONEN

METHOD AND DEVICE FOR MOJNITORINGTHE INTEGRITY OF INFORMATION PROVIDED BY A HYBRID INS/GNSS SYSTEM

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **06.10.2006 FR 0608792**

(43) Date de publication de la demande:
**17.06.2009 Bulletin 2009/25**

(73) Titulaire: **Thales**
**92200 Neuilly-sur-Seine (FR)**

(72) Inventeurs:
• **COATANTIEC, Jacques**
**F-26120 Fauconnieres (FR)**
• **MARTIN, Nicolas**
**F-26500 Bourg les Valence (FR)**

(74) Mandataire: **Esselin, Sophie et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**FR-A1- 2 866 423**

• **CALL C ET AL: "Performance of Honeywell's Inertial/GPS Hybrid (HIGH) for RNP Operations" POSITION, LOCATION, AND NAVIGATION SYMPOSIUM, 2006 IEEE/ION CORONADO, CA APRIL 25-27, 2006, PISCATAWAY, NJ, USA,IEEE, 25 avril 2006 (2006-04-25), page 244, XP010924866 ISBN: 0-7803-9454-2**
• **BRENNER M: "Integrated GPS/Inertial Fault Detection Availability" NAVIGATION, INSTITUTE OF NAVIGATION, WASHINGTON, DC, US, vol. 43, no. 2, 1996, pages 111-130, XP002433665 ISSN: 0028-1522**

## Description

L'invention est relative à la surveillance de l'intégrité d'informations de position et de vitesse issues d'une hybridation entre une centrale inertielle et un récepteur de positionnement par satellites. L'invention concerne plus précisément un équipement de navigation connu dans la technique sous le nom de système INS/GNSS (de l'anglo-saxon "Inertial Navigation System" et "Global Navigation Satellite System") hybridé en boucle fermée.

Une centrale inertielle est constituée d'un ensemble de capteurs inertiels (capteurs gyrométriques et capteurs accélérométriques) associés à une électronique de traitement. Une plate-forme de calcul, appelée plate-forme virtuelle PFV, délivre alors les informations de vitesse et de position du porteur dans un référentiel précis (souvent noté TGL, Trièdre Géographique Local). La plate-forme virtuelle PFV permet la projection et l'intégration des données issues des capteurs inertiels. La centrale inertielle fournit des informations précises à court terme mais dérivant sur le long terme (sous l'influence des défauts capteurs). La maîtrise des défauts capteurs représente une proportion très importante du coût de la centrale inertielle.

Un récepteur de positionnement par satellites fournit des informations de position et de vitesse du porteur par triangulation à partir des signaux émis par des satellites défilants visibles du porteur. Les informations fournies peuvent être momentanément indisponibles car le récepteur doit avoir en vue directe un minimum de quatre satellites du système de positionnement pour pouvoir faire un point. Elles sont en outre d'une précision variable, dépendant de la géométrie de la constellation à la base de la triangulation, et bruitées car reposant sur la réception de signaux de très faibles niveaux provenant de satellites éloignés ayant une faible puissance d'émission. Mais elles ne souffrent pas de dérive à long terme, les positions des satellites défilant sur leurs orbites étant connues avec précision sur le long terme. Les bruits et les erreurs peuvent être liés aux systèmes satellitaires, au récepteur ou à la propagation du signal entre l'émetteur satellitaire et le récepteur de signaux GNSS. En outre, les données satellites peuvent être erronées par suite de pannes affectant les satellites. Ces données non intègres doivent alors être repérées pour ne pas fausser la position issue du récepteur GNSS.

Pour prévenir les pannes satellites et assurer l'intégrité des mesures GNSS, il est connu d'équiper un récepteur de positionnement par satellites d'un système d'estimation de précision et de disponibilité dit RAIM (de l'anglo-saxon "Receiver Autonomous Integrity Monitoring") qui se base sur la géométrie et la redondance de la constellation de satellites utilisée lors de la triangulation et sur l'évolution prévisible à court terme de cette géométrie déduite de la connaissance des trajectoires des satellites. Cependant, l'algorithme RAIM, purement lié au système de localisation par satellites, n'est pas applicable à la surveillance d'un point de localisation issu d'un système hybride (INS/GNSS) et ne peut détecter que certains types de pannes en un temps donné.

L'hybridation consiste à combiner mathématiquement les informations de position et de vitesse fournies par la centrale inertielle et les mesures fournies par le récepteur de positionnement par satellites pour obtenir des informations de position et de vitesse en tirant avantage des deux systèmes. Ainsi, la précision des mesures fournies par le système GNSS permet de maîtriser la dérive inertielle et les mesures inertielles peu bruitées permettent de filtrer le bruit sur les mesures du récepteur GNSS. Cette combinaison fait très souvent appel à la technique de filtrage de Kalman.

Le filtrage de Kalman s'appuie sur les possibilités de modélisation de l'évolution de l'état d'un système physique considéré dans son environnement, au moyen d'une équation dite "d'évolution" (estimation a priori), et de modélisation de la relation de dépendance existant entre les états du système physique considéré et les mesures d'un capteur externe, au moyen d'une équation dite "d'observation" pour permettre un recalage des états du filtre (estimation a posteriori). Dans un filtre de Kalman, la mesure effective ou "vecteur de mesure" permet de réaliser une estimée a posteriori de l'état du système qui est optimale dans le sens où elle minimise la covariance de l'erreur faite sur cette estimation. La partie estimateur du filtre génère des estimées a posteriori du vecteur d'état du système en utilisant l'écart constaté entre le vecteur de mesure effectif et sa prédiction a priori pour engendrer un terme correctif, appelé innovation. Cette innovation, après une multiplication par un vecteur gain du filtre de Kalman, est appliquée à l'estimée a priori du vecteur d'état du système et conduit à l'obtention de l'estimée optimale a posteriori.

Dans le cas d'un système INS/GNSS hybridé, le filtre de Kalman reçoit les points de position et de vitesse fournis par la centrale inertielle et les mesures de positionnement fournies par le récepteur de positionnement par satellites, modélise l'évolution des erreurs de la centrale inertielle et délivre l'estimée a posteriori de ces erreurs qui sert à corriger le point de positionnement et de vitesse de la centrale inertielle.

L'estimation des erreurs de position et de vitesse dues aux défauts des capteurs inertiels apparaissant en sortie de la plate-forme virtuelle PFV de la centrale inertielle est réalisée par le filtre de Kalman. La correction des erreurs par le biais de leur estimation faite par le filtre de Kalman peut alors se faire en entrée de la plate-forme virtuelle PFV (architecture en boucle fermée) ou en sortie (architecture en boucle ouverte).

Lorsque les défauts des capteurs de la centrale inertielle, gyromètres, accéléromètres, et module barométrique (on parle dans ce cas de centrale baro-inertielle), ne sont pas trop importants, il n'est pas nécessaire d'appliquer les corrections en entrée de la plate-forme virtuelle PFV : la modélisation du système (linéarisation des équations régissant l'évolution du système), au sein du filtre reste valide. L'estimée a posteriori des erreurs de la centrale inertielle calculée dans le filtre de Kalman est utilisée uniquement pour l'élaboration d'estimées optimales de la position et de la vitesse du porteur en retranchant aux informations de position et de vitesse fournies par la centrale inertielle leurs estimées respectives calculées par le filtre de Kalman. L'hybridation est alors dite en boucle ouverte, et dans ce cas, l'hybridation n'a aucune influence sur les calculs réalisés par la plate-forme virtuelle PFV.

Lorsque les défauts inertiels sont trop importants ou lorsque la durée du vol est longue, la linéarisation des équations régissant l'évolution du modèle inertiel intégré au sein du filtre de Kalman n'est plus valide. Il est donc impératif d'appliquer les corrections à la plate-forme virtuelle PFV pour rester dans le domaine linéaire. L'estimée a posteriori des erreurs de la centrale baro-inertielle qui est calculée dans le filtre de Kalman sert non seulement à l'élaboration de l'estimée optimale de la position et de la vitesse du porteur mais aussi au recalage de la centrale inertielle au sein de la plate-forme virtuelle PFV. L'hybridation est alors dite « en boucle fermée » et les résultats du filtre d'hybridation sont employés par la plate-forme virtuelle pour réaliser ses calculs.

L'hybridation peut également se faire en observant des informations GNSS de natures différentes. Soit on considère la position et la vitesse du porteur résolues par le récepteur GNSS : on parle alors d'hybridation lâche ou hybridation en axes géographiques, soit on considère les informations extraites en amont par le récepteur GNSS que sont les pseudo-distances et les pseudo-vitesses (grandeurs directement issues de la mesure du temps de propagation et de l'effet Doppler des signaux émis par les satellites en direction du récepteur) : on parle alors d'hybridation serrée ou en axes satellites. Avec un système INS/GNSS en boucle fermée où le point résolu par le récepteur GNSS est utilisé pour recaler les informations provenant de la centrale inertielle, il est nécessaire de prêter une attention particulière aux défauts affectant les informations fournies par les satellites car le récepteur qui les reçoit propagera ces défauts à la centrale inertielle en entraînant un mauvais recalage de cette dernière. Le problème se pose de façon particulièrement critique pour assurer l'intégrité d'un point hybride INS/GPS. Dans ce qui suit, on s'intéresse à des systèmes intégrant une hybridation serrée, en boucle fermée.

Pour quantifier l'intégrité d'une mesure de position dans des applications telles que les applications aéronautiques, où l'intégrité est critique, on utilise un paramètre appelé « rayon de protection » de la mesure de position. Le rayon de protection correspond à une erreur de position maximale pour une probabilité donnée d'apparition d'erreur. C'est-à-dire que la probabilité que l'erreur de position dépasse le rayon de protection annoncé sans qu'une alarme soit envoyée à un système de navigation, est inférieure à cette valeur de probabilité donnée. Le calcul se fonde sur deux types d'erreur qui sont d'une part les erreurs normales de mesure et d'autre part les erreurs causées par une anomalie de fonctionnement de la constellation de satellites, soit par exemple une panne d'un satellite.

La valeur du rayon de protection d'un système de positionnement est une valeur clef spécifiée par des donneurs d'ordre désirant acquérir un système de positionnement. L'évaluation de la valeur du rayon de protection résulte en général de calculs de probabilités utilisant les caractéristiques statistiques de précision des mesures GNSS et du comportement des senseurs inertiels. Ces calculs s'explicitent de façon formelle et permettent des simulations pour l'ensemble des cas de constellation GNSS, pour l'ensemble des positions possibles du système de positionnement sur le globe terrestre et pour l'ensemble de trajectoires possibles suivies par le système de positionnement. Les résultats de ces simulations permettent de fournir au donneur d'ordre des caractéristiques de rayon de protection garanties par le système de positionnement proposé. Le plus souvent ces caractéristiques s'expriment sous la forme d'une valeur du rayon de protection pour une disponibilité de 100% ou d'une durée d'indisponibilité pour une valeur requise du rayon de protection.

Le document "Performance of Honeywell's Inertial/GPS Hybrid (HIGH) for RNP Operations" (C. Call, M Ibis, J McDonald et K. Vanderwerf - IEEE PLANS, Position Location and Navigation Symposium - 2006) décrit un procédé de surveillance de l'intégrité d'informations de position et de vitesse d'un système de navigation hybride comprenant une centrale inertielle et un récepteur de positionnement par satellites, et mettant en oeuvre une hybridation serrée en boucle ouverte.

La présente invention pallie les inconvénients des solutions connues présentées ci-dessus. Elle a pour but d'améliorer la précision de la mesure de position en utilisant des corrections hybrides délivrées par un filtre de Kalman recevant des signaux de tous les satellites visibles poursuivis. Elle a également pour objectif de fournir une expression formelle permettant le calcul de la valeur du rayon de protection, en tout lieu pour une trajectoire quelconque et à n'importe quel instant.

A cet effet, l'invention a pour objet un système hybride comportant :

- un module barométrique BARO, 30 délivrant des mesures d'altitude barométrique MBA ;
- une unité de mesure inertielle UMI , 20 délivrant des incréments d'angle $\Delta\theta$ et des incréments de vitesse $\Delta V$ ;
- une plate-forme virtuelle PFV, 60 recevant les incréments d'angle $\Delta\theta$, les incréments de vitesse $\Delta V$, et produisant des points de positionnement et de vitesse inertiels PPVI constituant respectivement une position hybride et une vitesse hybride ;
- un récepteur de positionnement par satellites GNSS, 10 opérant à partir d'une constellation de N satellites visibles poursuivis, et produisant des mesures brutes, $MB_i$ des signaux émis par ces satellites, i désignant un indice de satellite et étant compris entre 1 et N ;

- un filtre de Kalman d'hybridation MKF, 40 recevant les points de positionnement et de vitesse inertiels PPVI, les mesures d'altitude barométrique MBA, et les mesures brutes $MB_i$ des signaux émis par les N satellites, ledit filtre délivrant: - une correction hybride HYC comportant une estimation d'un vecteur d'état VE correspondant aux erreurs du système hybride, obtenue en observant les écarts entre les points de positionnement et de vitesse inertiels PPVI et les mesures brutes $MB_i$, et

- une matrice de variance/covariance, MHYP de l'erreur faite sur l'estimation du vecteur d'état VE ;

- un banc de N filtres secondaires $KSF_i$, $50_i$ recevant chacun les points de positionnement et de vitesse inertiels PPVI, les mesures d'altitude barométrique MBA, et les mesures brutes $MB_i$ des signaux émis par les satellites poursuivis sauf le satellite d'indice i, lesdits filtres secondaires $KSF_i$ délivrant des paramètres hybrides $SHYP_i$ comportant :

- une estimation d'un vecteur d'état, $EVE_i$ correspondant aux erreurs du système hybride, calculé en observant des écarts entre les points de positionnement et de vitesse inertiels PPVI et les mesures brutes des signaux émis par les satellites poursuivis sauf le satellite i $SPP_i$, et

- une matrice de variance/covariance secondaire $P_i$ de l'erreur faite sur l'estimation du vecteur d'état $EVE_i$ ,

- un module de calcul CAL, 70 recevant les paramètres hybrides $SHYP_i$ et la matrice de variance/covariance, MHYP, ledit module de calcul CAL, 70 déterminant un rayon de protection horizontal $R_T$ associé à la position hybride, et lorsque des composantes de l'estimation du vecteur d'état $EVE_i$ concernant la position sont supérieure à un seuil de détection $TH_i$, déclenchant une alarme sur une défaillance d'un filtre secondaire $KSF_i$, et identifiant éventuellement un satellite défaillant parmi les N satellites visibles poursuivis,

caractérisé en ce que les filtres secondaires $KSF_i$ et la plate-forme virtuelle PFV reçoivent en outre la correction hybride HYC.

L'invention concerne également un procédé de surveillance d'intégrité de positions hybrides délivrées par une plate-forme virtuelle PFV, 60 d'un système hybride selon une des revendications précédentes, ledit procédé déterminant un rayon de protection horizontal $RP_T$, ledit procédé étant mis en oeuvre par le module de calcul CAL, 70 du système hybride la détermination du rayon de protection horizontal $RP_T$ comportant les étapes de calcul :

- détermination d'un rayon de protection horizontal auxiliaire $RP_{H1}$, sous une hypothèse dite $H_1$, qu'une des mesures brutes, $MB_i$ est erronée,

- détermination d'un rayon de protection horizontal auxiliaire $RP_{H0}$, sous une hypothèse dite $H_0$, qu'aucune des mesures brutes, $MB_i$ est erronée ;

- détermination du rayon de protection horizontal $RP_T$ comme un maximum des rayons de protection auxiliaires horizontaux $RP_{H0}$ et $RP_{H1}$.

caractérisé en ce que :

la détermination des rayons de protection horizontaux auxiliaires $RP_{H0}$ et $RP_{H1}$ est fondée sur une détermination d'un rayon d'un cercle enveloppant une ellipse de confiance dans un plan horizontal, et en ce que l'ellipse de confiance est déterminée à partir d'une matrice de variance/covariance et d'une valeur de probabilité recherchée.

D'autres caractéristiques et avantages de l'invention apparaîtront à la lecture de la description détaillée qui suit, faite à titre d'exemple non limitatif et en référence aux dessins annexés dans lesquels :

- la figure 1 représente schématiquement un système hybride, en boucle fermée et hybridation serrée, selon l'état de l'art ;

- la figure 2 représente schématiquement un système hybride en boucle fermée et hybridation serrée, selon l'invention ;

- la figure 3 représente une ellipse de confiance et un cercle enveloppant l'ellipse, le rayon du cercle est employé dans le procédé de surveillance de l'intégrité d'informations selon l'invention ;

D'une figure à l'autre, les mêmes éléments sont repérés par les mêmes références.

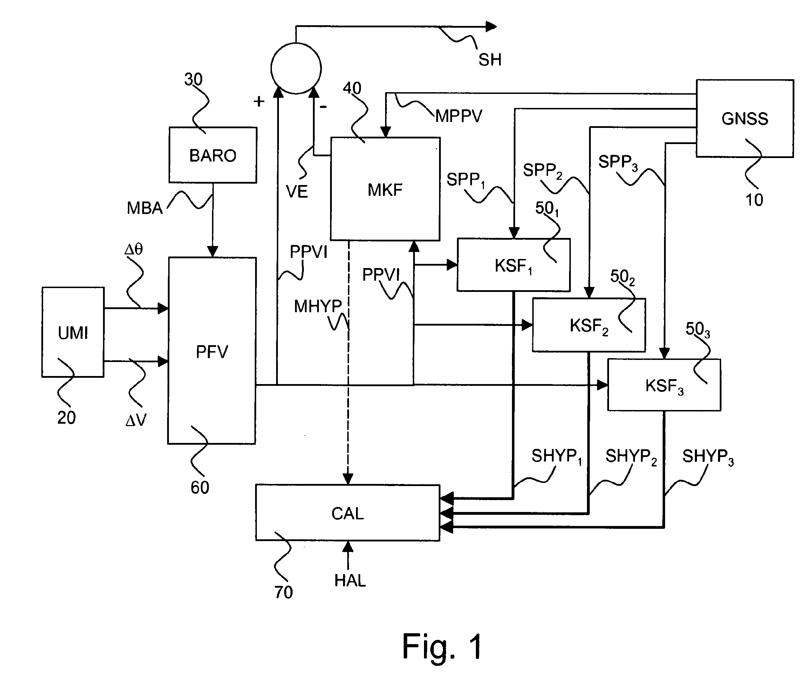

La figure 1 représente un système hybride selon l'art antérieur. Le système hybride, comporte ;

- un récepteur de positionnement par satellites, GNSS, 10, recevant des signaux d'une constellation de N satellites visibles poursuivis ;

- une unité de mesure inertielle UMI, 20 délivrant des incréments d'angle $\Delta\theta$ et des incréments de vitesse $\Delta V$ ;

- un module barométrique BARO, 30, délivrant des mesures d'altitude barométrique MBA ;

- un filtre de Kalman d'hybridation, MKF 40 ;

- un banc de N filtres secondaires, $KSF_i$ 50i,

- une plate-forme virtuelle, PFV, 60 recevant les incréments d'angle $\Delta\theta$ et les incréments de vitesse $\Delta V$ ;

- un module de calcul CAL, 70.

L'unité de mesure inertielle, UMI comporte des gyromètres et des accéléromètres non représentés : les incréments d'angle $\Delta\theta$ sont délivrés par les gyromètres et les incréments de vitesse $\Delta V$ sont délivrées par les accéléromètres.

La plate-forme virtuelle, PFV reçoit les mesures d'altitude barométrique, MBA. La plate-forme virtuelle, PFV produit des points de positionnement et de vitesse inertiels, PPVI constituant respectivement une position hybride et une vitesse hybride. Les mesures d'altitude barométriques qui sont employées par la plate-forme, PFV pour éviter une dérive de la position hybride suivant un axe vertical.

Le récepteur de positionnement par satellites, GNSS délivre des mesures brutes, $MB_i$ de signaux émis par les satellites, i désignant un indice de satellite et étant compris entre 1 et N.

Le filtre de Kalman d'hybridation, MKF reçoit un ensemble de N mesures brutes, $MB_i$. Cet ensemble de N mesures brutes est noté MPPV.

Le filtre de Kalman secondaire $KSF_i$ reçoit les mesures brutes $MB_i$ de N-1 signaux. Les N-1 signaux sont produits par les satellites poursuivis sauf le satellite d'indice i. Cet ensemble de mesures brutes $MB_i$ de N-1 signaux est noté $SPP_i$.

Le filtre d'hybridation MKF et les filtres secondaires $KSF_i$ et reçoivent les points de positionnement et de vitesse inertiels PPVI.

Le filtre d'hybridation MKF cherche à estimer les erreurs réalisées sur les positions inertielles PPVI, il produit :

- un vecteur d'état VE correspondant aux erreurs du système hybride, obtenue en observant les écarts entre les points de positionnement et de vitesse inertiels PPVI et les mesures brutes $MB_i$ correspondantes ;
- une matrice de variance/covariance, MHYP de l'erreur faite sur l'estimation du vecteur d'état VE.

Les filtres secondaires $KSF_i$ produisent des paramètres hybrides $SHYP_i$ qui comportent :

- une estimation d'un vecteur d'état, $EVE_i$ correspondant aux erreurs du système hybride observant des écarts entre les points de positionnement et de vitesse inertiels PPVI et l'ensemble de mesures brutes $SPP_i$ et,
- une matrice de variance/covariance secondaire $P_i$ de l'erreur faite sur l'estimation du vecteur d'état $EVE_i$.

Le système hybride délivre une sortie hybride SH composée d'une différence entre les positions inertielles PPVI et le vecteur d'état VE.

Le module de calcul CAL reçoit les paramètres hybrides $SHYP_i$ et la matrice de variance/covariance, MHYP et détermine une valeur de rayon de protection $RP_T$.

On l'a déjà évoqué, un rayon de protection est une mesure très importante dans certaines applications où il est indispensable d'assurer l'intégrité des données. On rappelle que le rayon de protection RP d'une mesure, pour une probabilité de non-intégrité prédéterminée $P_{ni}$, est une borne supérieure de l'écart entre la valeur calculée et la valeur réelle de la grandeur mesurée, telle qu'on a une probabilité inférieure à $P_{ni}$ que la valeur réelle soit éloignée de la valeur calculée d'une distance supérieure à RP sans que l'on déclenche une alarme vers un système de navigation. Autrement dit, il y a donc une probabilité maximale $P_{ni}$ pour que la valeur réelle soit en dehors d'un cercle de rayon RP autour de la valeur qu'on a mesurée ou encore qu'il y a une probabilité maximale $P_{ni}$ de se tromper dans la détermination du rayon de protection

Ce rayon de protection est calculé à partir des écarts-types des variables considérées. Il s'applique à chaque composante du vecteur d'état, mais en pratique, on s'intéresse aux variables de position. On peut calculer plus spécifiquement un rayon de protection vertical pour l'altitude et un rayon de protection horizontal pour la position en longitude et latitude, ces rayons n'ayant pas forcément la même valeur et n'étant pas utilisés de la même manière.

Le principe du calcul du rayon de protection horizontal est présenté dans ce qui suit :

Le rayon de protection est en général une donnée qui est calculée puis comparée à un seuil HAL fixé en fonction de l'application, le dépassement du seuil génère une alerte indiquant soit que la mesure de position ne peut pas être considérée comme suffisamment fiable ou disponible dans le contexte de l'application

Avantageusement, le module de calcul, CAL identifie le satellite d'indice i comme défaillant, le filtre secondaire $KSF_i$ est substitué au filtre de d'hybridation MKF.

On évalue le rayon de protection $RP_{H0}$ en l'absence de panne de satellite, hypothèse communément désignée $H_0$. Par "panne" on entend une situation anormale où le satellite émet des signaux qui ont l'apparence de signaux normaux mais qui sont anormaux et conduisent à des erreurs de position.

Le rayon de protection $RP_{H0}$ est lié directement à la variance de la grandeur mesurée et à la probabilité $P_{ni}$ que cette erreur dépasse le rayon de protection. La variance est le carré de l'écart type σ lié à la grandeur mesurée. La variance de la position mesurée est donc le coefficient de la diagonale de la matrice de variance/covariance P qui correspond à la grandeur mesurée. L'écart type σ est la racine carrée de cette variance et se déduit donc de la matrice P du filtre d'hybridation.

Dans le système hybride selon l'art antérieur, on calcule le rayon de protection $RP_{H0}$ à partir des coefficients de la matrice de variance/covariance P tels qu'ils apparaissent à l'instant de mesure. Si la configuration des satellites évolue, la valeur du rayon de protection $RP_{H0}$ est mise à jour en même temps. Si un satellite disparaît de la constellation visible, le rayon de protection $RP_{H0}$ ne se dégrade que progressivement. Si au contraire un satellite nouveau apparaît, le rayon de protection diminue instantanément, ce qui est très avantageux.

On peut également calculer un rayon de protection $RP_{H1}$ prenant en compte le risque de panne d'un satellite, hypothèse communément désignée $H_1$. Le récepteur utilise pour cela la méthode bien connue sous le nom de « maximum de séparation » : Dans ce cas, le récepteur comporte un filtre de Kalman d'hybridation MKF qui fonctionne comme on l'a décrit précédemment et N filtres secondaires, si N est le nombre de satellites pouvant être vus en même temps. Les N filtres secondaires fonctionnent en parallèle avec le filtre Kalman d'hybridation MKF et suivant le même principe que ce dernier. Mais le filtre secondaire de rang i reçoit les signaux de tous les satellites sauf celui provenant du satellite de rang i.

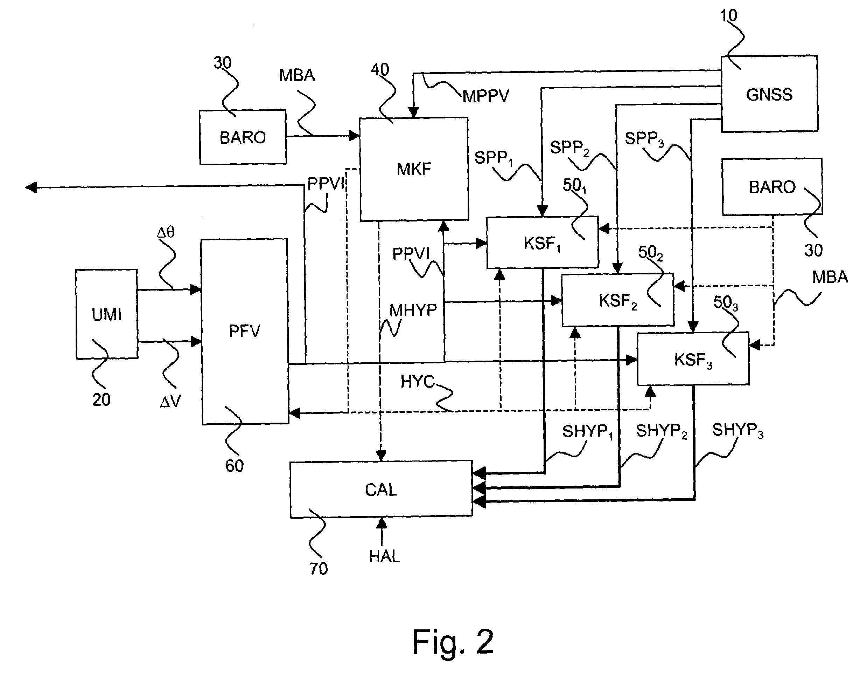

La figure 2 représente un système hybride en boucle fermée et hybridation serrée, selon l'invention.

Une première différence avec le système hybride de l'art antérieur concerne la prise en compte des mesures barométriques MBA par le système hybride et le fait que la sortie hybride du système est égale aux positions inertielles PPVI délivrées par la plate-forme virtuelle, PFV.

Selon l'invention, les mesures barométriques MBA sont reçues par le filtre d'hybridation d'une part, et par les filtres secondaires $KSF_i$.

Ainsi, un asservissement de la position suivant un vertical est directement réalisé par le filtre de Kalman : il n'est pas besoin de développer un asservissement indépendant du filtre de Kalman comme cela est le cas dan l'art antérieur.

Une deuxième différence avec le système hybride de l'art antérieur, concerne la production par le filtre d'hybridation MKF d'une correction hybride HYC qui comporte une estimation du vecteur d'état VE. La correction hybride HYC est délivrée d'une part à la plateforme virtuelle, et d'autre part aux filtres secondaires $SKF_i$. De sorte que, les points de positionnement et de vitesse inertiels PPVI produits par la plate-forme PFV constituent directement la position hybride et la vitesse hybride, et que la valeur des composantes des vecteurs d'états EV et $EVE_i$ sont proches de zéro.

Une troisième différence concerne le procédé de calcul du rayon de protection par le module de calcul CAL. Le principe du calcul est basé sur une évaluation d'une ellipse de confiance.

Considérons X1 et X2 deux variables gaussiennes à moyenne nulle, d'écart type respectifs $\sigma_1$, et $\sigma_2$ et de coefficient de corrélation $\rho$. Par exemple, X1 et X2 correspondent à des erreurs de position exprimées en latitude et longitude. Un domaine du plan X1, X2 correspondant à une valeur de densité de probabilité conjointe de X1 et X2 constante et égale à R0 est une ellipse d'équation :

$$\frac{X_1{}^2}{\sigma_1{}^2} - 2\frac{\rho X_1 X_2}{\sigma_1 \sigma_2} + \frac{X_2{}^2}{\sigma_2{}^2} = R0^2$$

Si on veut que l'aire de l'ellipse corresponde à une probabilité Pb c'est à dire que l'on veut obtenir une probabilité Pb que l'erreur de position soit à l'intérieur de l'ellipse, il faut imposer la relation :

$$R0 = \sqrt{-2.(1-\rho).Ln(1-Pb)}$$

Lorsque X1 et X2 correspondent à des erreurs de position horizontale déterminée, par exemple par hybridation de mesures de signaux produits par une constellation de satellites et les données d'une centrale inertielle, une ellipse de confiance est parfaitement définie dès que l'on fixe une valeur de probabilité recherchée Pb et que l'on connaît une matrice de variance/covariance de dimension 2*2 associée à X1 et X2. En effet si P est une matrice de variance/covariance liant ces deux variables, $\sigma_1$ et $\sigma_2$ sont les coefficients diagonaux de la matrice P et $\rho$ est égal à son coefficient non diagonal.

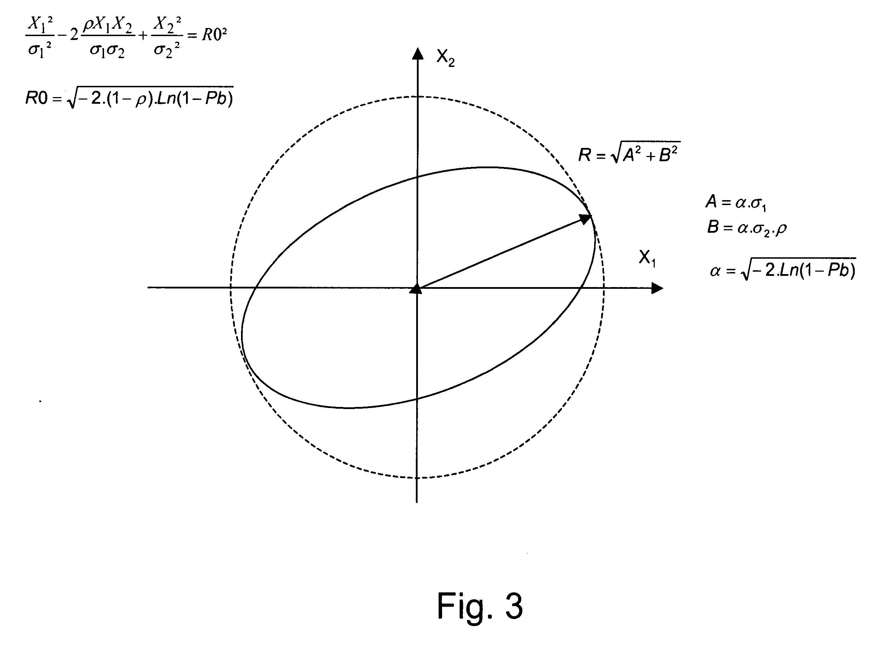

La figure 3 représente une ellipse de confiance employée dans le procédé de calcul du rayon de protection.

Un cercle de rayon R tel que $R^2 = A^2 + B^2$ définit une enveloppe de l'ellipse de confiance à condition que :

$$A = \alpha \, . \, \sigma_1$$

$$B = \alpha \, . \, \sigma_2 \, . \, \rho$$

$$\alpha = \sqrt{-2.Ln(1-Pb)}$$

On peut donc déterminer une valeur de rayon de protection pour deux variables, par exemple des positions hybrides, à partir des expressions déterministes précédentes dès que l'on connaît les valeurs de probabilité Pb recherchée et la matrice de variance/covariance de dimension 2 x 2 correspondant à ces variables.

Avantageusement, la détermination du rayon de protection horizontal auxiliaire $RP_{H1}$ est fondée sur une valeur de probabilité de fausse alarme souhaitée $\tau_1$ et sur une valeur de probabilité de détection manquée souhaitée $\tau_2$.

Avantageusement, la détermination du rayon de protection horizontal auxiliaire $RP_{H0}$ est fondée sur une valeur de probabilité de détection manquée souhaitée $\tau_2$ et sur une valeur de probabilité d'occurrence d'un défaut satellite non détecté $\tau_3$.

Avantageusement, une matrice $PE_i$ de varian-

ce/covariance, de dimension 2x2, étant extraite d'une matrice auxiliaire $PS_i = P_i - MHYP$, les axes extraits de la matrice $PS_i$ correspondant aux positions horizontales, caractérisé en ce que la détermination du rayon de protection horizontal auxiliaire $RP_{H1}$ sous l'hypothèse $H_1$, comporte les étapes :

- Déterminer $P01 = 1 - \tau_1/N$ ;
- Déterminer une valeur de seuil de test $TH_i$ en se fondant sur la valeur P01 et sur la matrice $PE_i$;
- Déterminer $P02 = 1 - \tau_2$
- Déterminer une valeur de rayon de protection auxiliaire $d_i$ comme égale au rayon du cercle enveloppant une ellipse déterminée à partir de la matrice $PE_i$ et de la probabilité PO2 ;
- Déterminer la valeur de rayon $RP_{H1}$ comme une valeur maximale de $(TH_i + d_i)$ , pour toutes les valeurs de i entre 1 et N.

Avantageusement, une matrice P de variance/covariance de dimension 2x2 étant extraite de la matrice de variance/covariance MHYP, les axes extraits de la matrice MHYP correspondant aux positions horizontales, caractérisé en ce que la détermination du rayon de protection horizontal auxiliaire $RP_{H0}$ sous l'hypothèse $H_0$, comporte les étapes :

- Déterminer $P03 = 1 - \tau_2 . \tau_3$ ;
- Déterminer la valeur de rayon $RP_{H0}$ comme égale au rayon du cercle enveloppant une ellipse déterminée à partir de la matrice P et de la probabilité P03.

**Revendications**

1.  Système hybride comportant :

    - un module barométrique BARO, (30) délivrant des mesures d'altitude barométrique MBA ;
    - une unité de mesure inertielle UMI (20) délivrant des incréments d'angle $\Delta\theta$ et des incréments de vitesse $\Delta V$ ;
    - une plate-forme virtuelle PFV (60) recevant les incréments d'angle $\Delta\theta$, les incréments de vitesse $\Delta V$ et produisant des points de positionnement et de vitesse inertiels PPVI constituant respectivement une position hybride et une vitesse hybride ;
    - un récepteur de positionnement par satellites GNSS (10) opérant à partir d'une constellation de N satellites visibles poursuivis, et produisant des mesures brutes, $MB_i$ des signaux émis par ces satellites, i désignant un indice de satellite et étant compris entre 1 et N ;
    - un filtre de Kalman d'hybridation MKF (40) recevant les points de positionnement et de vitesse inertiels PPVI, les mesures d'altitude barométrique MBA, et les mesures brutes $MB_i$ des signaux émis par les N satellites, ledit filtre délivrant :

        - une correction hybride HYC comportant une estimation d'un vecteur d'état VE correspondant aux erreurs du système hybride, obtenue en observant les écarts entre les points de positionnement et de vitesse inertiels PPVI et les mesures brutes $MB_i$, et
        - une matrice de variance/covariance, MHYP de l'erreur faite sur l'estimation du vecteur d'état VE ;

    - un banc de N filtres secondaires $KSF_i$ ($50_i$) recevant chacun les points de positionnement et de vitesse inertiels PPVI, les mesures d'altitude barométrique MBA, et les mesures brutes $MB_i$ des signaux émis par les satellites poursuivis sauf le satellite d'indice i, lesdits filtres secondaires $KSF_i$ délivrant des paramètres hybrides $SHYP_i$ comportant

        - une estimation d'un vecteur d'états, $EVE_i$ correspondant aux erreurs du système hybride, calculé en observant des écarts entre les points de positionnement et de vitesse inertiels PPVI et les mesures brutes des signaux émis par les satellites poursuivis sauf le satellite i $SPP_i$, et
        - une matrice de variance/covariance secondaire $P_i$ de l'erreur faite sur l'estimation du vecteur d'état $EVE_i$ ;

    - un module de calcul CAL (70) recevant les paramètres hybrides $SHYP_i$ et la matrice de variance/covariance, MHYP, ledit module de calcul CAL déterminant un rayon de protection horizontal $R_T$ associé à la position hybride, et lorsque des composantes de l'estimation du vecteur d'état $EVE_i$ concernant la position sont supérieure à un seuil de détection $TH_i$, déclenchant une alarme sur une défaillance d'un filtre secondaire $KSF_i$, et identifiant éventuellement un satellite défaillant parmi les N satellites visibles poursuivis,

    **caractérisé en ce que** les filtres secondaires $KSF_i$ et la plate-forme virtuelle PFV reçoivent en outre la correction hybride HYC.

2.  Système selon la revendication 1,0 **caractérisé en ce que** lorsque le module de calcul CAL (70) identifie le satellite d'indice i comme défaillant, le filtre secondaire $KSF_i$ (50;) est substitué au filtre de Kalman MKF (40).

3.  Procédé de surveillance d'intégrité de positions hybrides délivrées par une plate-forme virtuelle PFV

(60) d'un système hybride selon une des revendications précédentes, ledit procédé déterminant un rayon de protection horizontal $RP_T$, ledit procédé étant mis en oeuvre par le module de calcul CAL (70) du système hybride la détermination du rayon de protection horizontal $RP_T$ comportant les étapes de calcul :

- détermination d'un rayon de protection horizontal auxiliaire $RP_{H1}$, sous une hypothèse dite $H_1$, qu'une des mesures brutes, $MB_i$ est erronée,
- détermination d'un rayon de protection horizontal auxiliaire $RP_{H0}$, sous une hypothèse dite $H_0$, qu'aucune des mesures brutes, $MB_i$ est erronée ;
- détermination du rayon de protection horizontal $RP_T$ comme un maximum des rayons de protection auxiliaires horizontaux $RP_{H0}$ et $RP_{H1}$. **caractérisé en ce que** :

la détermination des rayons de protection horizontaux auxiliaires $RP_{H0}$ et $RP_{H1}$ est fondée sur une détermination d'un rayon d'un cercle enveloppant une ellipse de confiance dans un plan horizontal, et **en ce que** l'ellipse de confiance est déterminée à partir d'une matrice de variance/covariance et d'une valeur de probabilité recherchée.

**4.** Procédé selon la revendication 3, **caractérisé en ce que** la détermination du rayon de protection horizontal auxiliaire $RP_{H1}$ est fondée sur une valeur de probabilité de fausse alarme souhaitée $\tau_1$ et sur une valeur de probabilité de détection manquée souhaitée $\tau_2$.

**5.** Procédé selon la revendication 3, **caractérisé en ce que** la détermination du rayon de protection horizontal auxiliaire $RP_{H0}$ est fondée sur une valeur de probabilité de détection manquée souhaitée $\tau_2$ et sur une valeur de probabilité d'occurrence d'un défaut satellite non détecté $\tau_3$.

**6.** Procédé selon la revendication 4, une matrice $PE_i$ de variance/covariance, de dimension 2x2, étant extraite d'une matrice auxiliaire $PS_i$= $Pi$ - MHYP, les axes extraits de la matrice $PS_i$ correspondant aux positions horizontales, **caractérisé en ce que** la détermination du rayon de protection horizontal auxiliaire $RP_{H1}$ sous l'hypothèse $H_1$, comporte les étapes :

- Déterminer P01 = 1- $\tau_1$/N ;
- Déterminer une valeur de seuil de test $TH_i$ en se fondant sur la valeur P01 et sur la matrice $PE_i$;
- Déterminer P02 =1-$\tau_2$ ;
- Déterminer une valeur de rayon de protection auxiliaire $d_i$ comme égale au rayon du cercle enveloppant une ellipse déterminée à partir de la matrice $PEi$ et de la probabilité P02 ;
- Déterminer la valeur de rayon $RP_{H0}$ comme une valeur maximale de $(TH_i + d_i)$ , pour toutes les valeurs de i entre 1 et N.

**7.** Procédé selon la revendication 5, une matrice P de variance/covariance de dimension 2x2 étant extraite de la matrice de variance/covariance MHYP, les axes extraits de la matrice MHYP correspondant aux positions horizontales, **caractérisé en ce que** la détermination du rayon de protection horizontal auxiliaire $RP_{H0}$ sous l'hypothèse $H_0$, comporte les étapes :

- Déterminer P03 = 1- $\tau_2.\tau_3$ ;
- Déterminer la valeur de rayon $RP_{H0}$ comme égale au rayon du cercle enveloppant une ellipse déterminée à partir de la matrice P et de la probabilité P03.

**Claims**

**1.** Hybrid system comprising:

- a barometric module BARO, (30) delivering measurements of barometric altitude MBA;
- an inertial measurement unit UMI (20) delivering angle increments $\Delta\theta$ and speed increments $\Delta V$;
- a virtual platform PFV (60) receiving the angle increments $\Delta\theta$, the speed increments $\Delta V$ and producing inertial positioning and speed fixes PPVI constituting respectively a hybrid position and a hybrid speed;
- a satellite-based positioning receiver GNSS (10) operating on the basis of a constellation of N tracked visible satellites, and producing raw measurements, $MB_i$ of the signals transmitted by these satellites, i denoting a satellite index and lying between 1 and N;
- a Kalman hybridization filter MKF (40) receiving the inertial positioning and speed fixes PPVI, the measurements of barometric altitude MBA, and the raw measurements $MB_i$ of the signals transmitted by the N satellites, said filter delivering:

- a hybrid correction HYC comprising an estimation of a state vector VE corresponding to the errors of the hybrid system and obtained by observing the deviations between the inertial positioning and speed fixes PPVI and the raw measurements $MB_i$, and
- a variance/covariance matrix MHYP of the error made in the estimation of the state vector VE;
- a bank of N secondary filters $KSF_i$ (50i) each receiving the inertial positioning and speed fixes PPVI, the measurements of barometric altitude MBA, and the raw measurements $MB_i$ of the signals transmitted by the tracked satellites except the satellite of index i, said secondary filters $KSF_i$ delivering hybrid parameters $SHYP_i$ comprising

- an estimation of a state vector $EVE_i$ corresponding to the errors of the hybrid system, calculated by observing deviations between the inertial positioning and speed fixes PPVI and the raw measurements of the signals transmitted by the tracked satellites except the satellite i $SPP_i$, and
- a secondary variance/covariance matrix $P_i$ of the error made in the estimation of the state vector $EVE_i$;
- a calculation module CAL (70) receiving the hybrid parameters $SHYP_i$ and the variance/covariance matrix, MHYP, said calculation module CAL determining a horizontal protection radius $R_T$ associated with the hybrid position, and, when components of the estimation of the state vector $EVE_i$ relating to the position are greater than a detection threshold $TH_i$, triggering an alarm upon a failure of a secondary filter $KSF_i$, and optionally identifying a failed satellite from among the N tracked visible satellites,

**characterized in that** the secondary filters $KSF_i$ and the virtual platform PFV furthermore receive the hybrid correction HYC.

2. System according to Claim 1, **characterized in that** when the calculation module CAL (70) identifies the satellite of index i as having failed, the secondary filter $KSF_i$ (50i) is substituted for the Kalman filter MKF (40).

3. Method of monitoring integrity of hybrid positions delivered by a virtual platform PFV (60) of a hybrid system according to one of the preceding claims, said method determining a horizontal protection radius $RP_T$, said method being implemented by the calculation module CAL (70) of the hybrid system the determination of the horizontal protection radius $RP_T$ comprising the calculation steps of:

- determination of an auxiliary horizontal protection radius $RP_{H1}$, under an hypothesis termed $H_1$, that one of the raw measurements, $MB_i$ is erroneous,
- determination of an auxiliary horizontal protection radius $RP_{H0}$, under an hypothesis termed $H_0$, that none of the raw measurements, $MB_0$ is erroneous;
- determination of the horizontal protection radius $RP_T$ as a maximum of the horizontal auxiliary protection radii $RP_{H0}$ and $RP_{H1}$,

**characterized in that**:
the determination of the auxiliary horizontal protection radii $RP_{H0}$ and $RP_{H1}$ is based on determining a radius of a circle enveloping a confidence ellipse in a horizontal plane, and **in that** the confidence ellipse is determined on the basis of a variance/covariance matrix and of a sought-after probability value.

4. Method according to Claim 3, **characterized in that** the determination of the auxiliary horizontal protection radius $RP_{H1}$ is based on a desired false alarm probability value $\tau_1$ and on a desired missed detection probability value $\tau_2$.

5. Method according to Claim 3, **characterized in that** the determination of the auxiliary horizontal protection radius $RP_{H0}$ is based on a desired missed detection probability value $\tau_2$ and on a value of probability of occurrence of an undetected satellite defect $\tau_3$.

6. Method according to Claim 4, a variance/covariance matrix PEi, of dimension 2x2, being extracted from an auxiliary matrix $PS_i$ - Pi - MHYP, the axes extracted from the matrix $PS_i$ corresponding to the horizontal positions, **characterized in that** the determination of the auxiliary horizontal protection radius $RP_{H1}$ under the hypothesis $H_1$, comprises the steps of:

- Determining $P01 = 1 - \tau_1/N$;
- Determining a test threshold value $TH_i$ based on the value P01 and on the matrix PEi;
- Determining $P02 = 1 - \tau_2$;
- Determining a value of auxiliary protection radius $d_i$ as equal to the radius of the circle enveloping an ellipse determined on the basis of the matrix PEi and of the probability P02;
- Determining the radius value $RP_{H0}$ as a maximum value of $(TH_i + d_i)$, for all the values of i between 1 and N.

7. Method according to Claim 5, a variance/covariance matrix P of dimension 2x2 being extracted from the variance/covariance matrix MHYP, the axes extracted from the matrix MHYP corresponding to the horizontal positions, **characterized in that** the determination of the auxiliary horizontal protection radius $RP_{H0}$ under the hypothesis $H_0$, comprises the steps of:

- Determining $P03 = 1 - \tau_2.\tau_3$;
- Determining the radius value $RP_{H0}$ as equal to the radius of the circle enveloping an ellipse determined on the basis of the matrix P and of the probability P03.

**Patentansprüche**

1. Hybridsystem, das enthält:

   - ein barometrisches Modul BARO (30), das barometrische Höhenmessungen MBA liefert;
   - eine Trägheitsmesseinheit UMI (20), die Winkelinkremente $\Delta\theta$ und Geschwindigkeitsinkremente $\Delta V$ liefert;
   - eine virtuelle Plattform PFV (60), die die Winkelinkremente $\Delta\theta$ und die Geschwindigkeitsinkremente $\Delta v$ empfängt und Ortungs- und Geschwindigkeits-Trägheitspunkte PPVI erzeugt, die eine hybride Position bzw. eine hybride Geschwindigkeit bilden;
   - einen Satellitenortungsempfänger GNSS (10), der ausgehend von einer Konstellation von N verfolgten sichtbaren Satelliten arbeitet und Rohmessungen $MB_i$ der von diesen Satelliten gesendeten Signale erzeugt, wobei i einen Satellitenindex bezeichnet und zwischen 1 und N liegt;
   - ein Kalman-Hybridisierungsfilter MKF (40), das die Ortungs- und Geschwindigkeits-Trägheitspunkte PPVI, die barometrischen Höhenmessungen MBA und die Rohmessungen $MB_i$ der von den N Satelliten gesendeten Signale empfängt, wobei das Filter liefert:

      - eine hybride Korrektur HYC, die eine Schätzung eines Zustandsvektors VE entsprechend den Fehlern des Hybridsystems aufweist, die durch Beobachtung der Abweichungen zwischen den Ortungs- und Geschwindigkeits-Trägheitspunkten PPVI und den Rohmessungen $MB_i$ erhalten wird, und
      - eine Varianz/Kovarianz-Matrix MHYP des bei der Schätzung des Zustandsvektors VE gemachten Fehlers;
      - eine Bank von N Sekundärfiltern $KSF_i$ ($50_i$), die je die Ortungs- und Geschwindigkeits-Trägheitspunkte PPVI, die barometrischen Höhenmessungen MBA und die Rohmessungen $MB_i$ der von den verfolgten Satelliten außer dem Satelliten mit dem Index i gesendeten Signale empfangen, wobei die Sekundärfilter $KSF_i$ hybride Parameter $SHYP_i$ liefern, die aufweisen
      - eine Schätzung eines Zustandsvektors $EVE_i$ entsprechend den Fehlern des Hybridsystems, berechnet unter Beobachtung der Abweichungen zwischen den Ortungs- und Geschwindigkeits-Trägheitspunkten PPVI und den Rohmessungen der von den verfolgten Satelliten außer dem Satelliten i $SPP_i$ gesendeten Signale, und
      - eine sekundäre Varianz/Kovarianz-Matrix

      $P_i$ des bei der Schätzung des Zustandsvektors $EVE_i$ gemachten Fehlers;

      - ein Rechenmodul CAL (70), das die hybriden Parameter $SHYP_i$ und die Varianz/Kovarianz-Matrix MHYP empfängt, wobei das Rechenmodul CAL einen der hybriden Position zugeordneten horizontalen Schutzradius $R\tau$, bestimmt, und wenn Komponenten der Schätzung des Zustandsvektors $EVE_i$ betreffend die Position höher als ein Erfassungsschwellwert $TH_i$ sind, einen Alarm bezüglich eines Defekts eines Sekundärfilters $KSF_i$ auslöst und ggf. unter den N verfolgten sichtbaren Satelliten einen defekten Satelliten identifiziert,

   **dadurch gekennzeichnet, dass** die Sekundärfilter $KSF_i$ und die virtuelle Plattform PFV außerdem die hybride Korrektur HYC empfangen.

2. System nach Anspruch 1, **dadurch gekennzeichnet, dass**, wenn das Rechenmodul CAL (70) den Satelliten mit dem Index i als defekt identifiziert, das Sekundärfilter $KSF_i$ ($50_i$) das Kalman-Filter MKF (40) ersetzt.

3. Verfahren zur Überwachung der Integrität von hybriden Positionen, die von einer virtuellen Plattform PFV (60) eines Hybridsystems nach einem der vorhergehenden Ansprüche geliefert werden, wobei das Verfahren eines horizontalen Schutzradius $RP_\tau$ bestimmt, wobei das Verfahren von dem Rechenmodul CAL (70) des Hybridsystems durchgeführt wird, wobei die Bestimmung des horizontalen Schutzradius $RP_\tau$, die Rechenschritte aufweist:

   - Bestimmung eines horizontalen Hilfs-Schutzradius $RP_{H1}$, unter einer mit $H_i$ bezeichneten Hypothese, dass eine der Rohmessungen $MB_i$ falsch ist,
   - Bestimmung eines horizontalen Hilfs-Schutzradius $RP_{H0}$, unter einer mit $H_0$ bezeichneten Hypothese, dass keine der Rohmessungen $MB_i$ falsch ist;
   - Bestimmung des horizontalen Schutzradius RP, als ein Maximum der horizontalen Hilfs-Schutzradien $RP_{H0}$ und $RP_{H1}$,

   **dadurch gekennzeichnet, dass**:

   - die Bestimmung der horizontalen Hilfs-Schutzradien $RP_{H0}$ und $RP_{H1}$ auf einer Bestimmung eines Radius eines Kreises beruht, der eine Konfidenzellipse in einer horizontalen Ebene umhüllt, und dass die Konfidenzellipse ausgehend von einer Varianz/Kovarianz-Matrix und von einem gesuchten Wahrscheinlichkeitswert bestimmt wird.

4. Verfahren nach Anspruch 3, **dadurch gekennzeichnet, dass** die Bestimmung des horizontalen Hilfs-Schutzradius $RP_{H1}$ auf einem gewünschten Fehlalarm-Wahrscheinlichkeitswert $\tau_1$ und auf einem gewünschten Fehlerfassungs-Wahrscheinlichkeitswert $\tau_2$ beruht.

5. Verfahren nach Anspruch 3, **dadurch gekennzeichnet, dass** die Bestimmung des horizontalen Hilfs-Schutzradius $RP_{H0}$ auf einem gewünschten Fehlerfassungs-Wahrscheinlichkeitswert $\tau_2$ und auf einem Wahrscheinlichkeitswert des Auftretens eines nicht erfassten Satellitenfehlers $\tau_3$ beruht.

6. Verfahren nach Anspruch 4, wobei eine Varianz/Kovarianz-Matrix $PE_i$ der Abmessung 2x2 aus einer Hilfsmatrix $PS_i = Pi - MHYP$ entnommen wird, wobei die aus der Matrix $PS_i$ entnommenen Achsen den horizontalen Positionen entsprechen, **dadurch gekennzeichnet, dass** die Bestimmung des horizontalen Hilfs-Schutzradius $RP_{H1}$ unter der Hypothese $H_i$ die Schritte aufweist:

   - Bestimmen von $P01 = 1 - \tau_1/N$;
   - Bestimmen eines Test-Schwellwerts $TH_i$ aufbauend auf dem Wert P01 und der Matrix $PE_i$;
   - Bestimmen von $P02 = 1 - \tau_2$;
   - Bestimmen eines Werts eines Hilfs-Schutzradius $d_i$ als gleich dem Radius des eine bestimmte Ellipse umhüllenden Kreises ausgehend von der Matrix $PE_i$ und der Wahrscheinlichkeit P02;
   - Bestimmen des Radiuswerts $RP_{H0}$ als ein maximaler Wert von $(TH_i + d_i)$ für alle Werte von i zwischen 1 und N.

7. Verfahren nach Anspruch 5, wobei eine Varianz/Kovarianz-Matrix P der Abmessung 2x2 aus der Varianz/Kovarianz-Matrix MHYP entnommen wird, wobei die aus der Matrix MHYP entnommenen Achsen den horizontalen Positionen entsprechen, **dadurch gekennzeichnet, dass** die Bestimmung des horizontalen Hilfs-Schutzradius $RP_{H0}$ unter der Hypothese H0 die Schritte aufweist:

   - Bestimmen von $P03 = 1 - \tau_2.\tau_3$;
   - Bestimmen des Radiuswerts $RP_{H0}$ als gleich dem Radius des eine bestimmte Ellipse umhüllenden Kreises ausgehend von der Matrix P und der Wahrscheinlichkeit P03.

Fig. 1

Fig. 2

$$\frac{X_1^2}{\sigma_1^2} - 2\frac{\rho X_1 X_2}{\sigma_1 \sigma_2} + \frac{X_2^2}{\sigma_2^2} = R0^2$$

$$R0 = \sqrt{-2.(1-\rho).Ln(1-Pb)}$$

$$R = \sqrt{A^2 + B^2}$$

$$A = \alpha.\sigma_1$$
$$B = \alpha.\sigma_2.\rho$$

$$\alpha = \sqrt{-2.Ln(1-Pb)}$$

Fig. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **C. Call ; M Ibis ; J McDonald ; K. Vanderwerf.** Performance of Honeywell's Inertial/GPS Hybrid (HIGH) for RNP Operations. *IEEE PLANS, Position Location and Navigation Symposium,* 2006